# EUROPEAN PATENT APPLICATION

(11) **EP 4 231 693 A1**
(43) Date of publication of application: **23.08.2023**
(21) Application number: 21879321.4
(22) Date of filing: 11.10.2021
(51) Int. Cl.: H04W 24/02

(54) **CONFIGURATION METHOD FOR AI NETWORK PARAMETER AND DEVICE**

(30) Priority: 13.10.2020 CN 202011092101
(71) Applicant: Vivo Mobile Communication Co., Ltd., Dongguan, Guangdong 523863 (CN)
(72) Inventor: YANG, Ang, Dongguan, Guangdong 523863 (CN)
(74) Representative: Murgitroyd & Company
(86) International application number: PCT/CN2021/122993
(87) International publication number: WO 2022/078276

(57) **Abstract**

Embodiments of this application disclose a configuration method for an AI network parameter and a device, which may improve performance of a communication system. The method includes: obtaining, by a first communication device, an AI network parameter in at least one of following manners: predefinition, receiving from a second communication device, or real-time training; or processing, by the first communication device, a target service according to the AI network parameter.

## Description

### CROSS-REFERENCE TO RELATED APPLICATIONS

This application claims priority to Chinese Patent Application No. 202011092101.8, filed in China on October 13, 2020 and entitled "CONFIGURATION METHOD FOR AI NETWORK PARAMETER AND DEVICE", which is incorporated herein by reference in its entirety.

### TECHNICAL FIELD

This application belongs to the field of communication technologies, and specifically, to a configuration method for an AI network parameter and a device.

### BACKGROUND

Artificial intelligence (Artificial Intelligence, AI) is a new technical science that studies and develops theories, methods, technologies, and application systems used for simulating, extending, and expanding human intelligence. By applying an AI network to an actual service, a plurality of problems in various fields may be resolved. However, in a current communication technology, there is no solution to introduce the AI network into a communication process, which is not conducive to improving performance of a communication system.

### SUMMARY

Embodiments of this application provide a configuration method for an AI network parameter and a device, which may improve performance of a communication system.

According to a first aspect, a configuration method for an AI network parameter is provided, including: obtaining, by a first communication device, an AI network parameter in at least one of the following manners: predefinition, receiving from a second communication device, and real-time training; and processing, by the first communication device, a target service according to the AI network parameter.

According to a second aspect, a first communication device is provided, including: an acquisition module, configured to obtain an AI network parameter in at least one of the following manners: predefinition, receiving from a second communication device, and real-time training; and a processing module, configured to process a target service according to the AI network parameter.

According to a third aspect, a first communication device is provided, including a processor, a memory, and a program or an instruction stored in the memory and executable on the processor, where when the program or the instruction is executed by the processor, the method according to the first aspect is implemented.

According to a fourth aspect, a readable storage medium is provided, storing a program or an instruction, where when the program or the instruction is executed by a processor, the method according to the first aspect is implemented.

According to a fifth aspect, a computer program product is provided, including a processor, a memory, and a program or an instruction stored in the memory and executable on the processor, where when the program or the instruction is executed by the processor, the method according to the first aspect is implemented.

According to a sixth aspect, a chip is provided, including a processor and a communication interface, where the communication interface is coupled to the processor, and the processor is configured to run a program or an instruction, to implement the method according to the first aspect.

In this embodiment of this application, the first communication device may obtain the AI network parameter in at least one of a manner of predefinition, a manner of receiving from the second communication device, and a manner of real-time training, so that the AI network is introduced into a communication process, which facilitates improvement of performance of the communication module and performance of the communication system.

### BRIEF DESCRIPTION OF THE DRAWINGS

FIG. 1 is a block diagram of a wireless communication system according to an embodiment of this application.
FIG. 2 is a schematic flowchart of a configuration method for an AI network parameter according to an embodiment of this application.
FIG. 3 is a schematic structural diagram of a first communication device according to an embodiment of this application.
FIG. 4 is a schematic structural diagram of a communication device according to an embodiment of this application.
FIG. 5 is a schematic structural diagram of a terminal according to an embodiment of this application.
FIG. 6 is a schematic structural diagram of a network-side device according to an embodiment of this application.

### DETAILED DESCRIPTION

The technical solutions in embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application shall fall within the protection scope of this application.

In the specification and claims of this application, terms "first" and "second" are used to distinguish similar objects, but are not used to describe a specific sequence or order. It may be understood that the data used in such a way is interchangeable in proper circumstances, so that the embodiments of this application can be implemented in other sequences than the sequence illustrated or described herein. In addition, objects distinguished by "first" and "second" are usually of a type, and the number of objects is not limited. For example, a first object may be one or more than one. In addition, in the specification and claims, "and/or" means at least one of the connected objects, and the character "/" generally indicates an "or" relationship between associated objects.

It should be noted that, the technology described in this embodiment of this application is not limited to a long term evolution (Long Term Evolution, LTE)/LTE evolution (LTE-Advanced, LTE-A) system, but may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in this embodiment of this application are often used interchangeably, and the described technologies may be used both for the systems and radio technologies mentioned above and may also be used for other systems and radio technologies. The following descriptions describe a new radio (New Radio, NR) system for the objective of being used as an example, and NR terms are used in most of the descriptions below. However, these technologies may also be applied to applications other than NR system applications, such as a 6^{th} generation (6^{th} Generation, 6G) communication system.

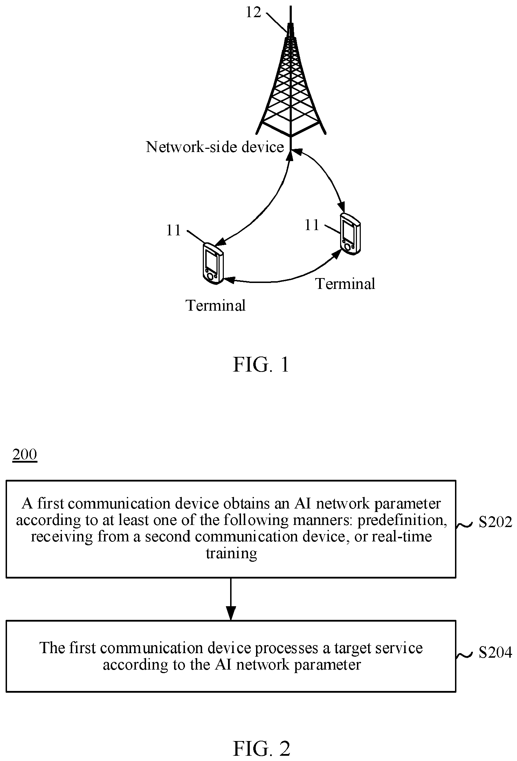

FIG. 1 is a block diagram of a wireless communication system to which an embodiment of this application may be applied. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), or vehicle user equipment (VUE), and pedestrian user equipment (PUE). The wearable device includes: a bracelet, headphones, glasses, or the like. It is to be noted that in this embodiment of this application, a specific type of the terminal 11 is not limited. The network-side device 12 may be a base station or a core network, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a household NodeB, a household evolved NodeB, a WLAN access point, a WiFi node, a transmission and reception point (Transmission and Reception Point, TRP) or some other proper terms in the field. Provided that the same technical effect is achieved, the base station is not limited to a specific technical vocabulary. It is to be noted that in this embodiment of this application, only a base station in the NR system is used as an example, but a specific type of the base station is not limited.

A configuration method for an artificial intelligence (Artificial Intelligence, AI) network parameter and a device provided in the embodiments of this application are described in detail below by using specific embodiments and application scenarios with reference to the accompanying drawings.

As shown in FIG. 2, an embodiment of this application provides a configuration method 200 for an AI network parameter. The method may be performed by a first communication device. In other words, the method may be performed by software or hardware installed in the first communication device, and the method includes the following steps.

S202. A first communication device obtains an AI network parameter in at least one of the following manners: predefinition, receiving from a second communication device, and real-time training.

The first communication device in each embodiment of the specification may be a terminal, and correspondingly, the second communication device is a network-side device; or the first communication device may also be a network-side device, and correspondingly, the second communication device is a terminal.

The AI network parameter may be a parameter required to form an AI network, and the AI network may be used for processing a target service, for example, signal processing, channel transmission, or the like. Optionally, the AI network parameter includes at least one of the following: a structure of an AI network, a multiplicative coefficient (such as a weight) of a neuron in an AI network, an additive coefficient (such as a bias) of a neuron in an AI network, and an activation function of a neuron in an AI network.

Activation functions used by a plurality of neurons in the AI network may be the same. For example, the neurons in the AI network use the same activation functions (if the neurons include the activation functions). Optionally, a neuron at an output layer of the AI network may further not include an activation function. For example, the neuron at the output layer of the AI network may not include the activation function, and another layer (such as an input layer, and a hidden layer) may also not include the activation function. Optionally, neurons at the same layer use the same activation functions (if the neurons include the activation functions), while neurons at different layers may use the same activation functions or different activation functions.

In this embodiment, an AI network parameter forming the AI network may be predefined, for example, specified in a protocol. In this way, in S202, the first communication device directly acquires a predefined AI network parameter.

In this embodiment, an AI network parameter forming the AI network may further be indicated by the second communication device. For example, the network-side device indicates an AI network parameter used by the terminal. In this way, in S202, the first communication device receives the AI network parameter from the second communication device.

In this embodiment, an AI network parameter forming the AI network may be obtained through real-time training. For example, in S202, the first communication device obtains the AI network parameter in a manner of model training.

In this embodiment, an AI network parameter forming the AI network may further be obtained through a combination of at least two of the three manners. For example, a part of AI network parameters are predefined in a protocol, the second communication device sends a part of AI network parameters to the first communication device, and these AI network parameters jointly form the AI network; in another example, a part of AI network parameters are predefined in a protocol, the first communication device obtains a part of AI network parameters through real-time training, and these AI network parameters jointly form the AI network; in another example, the second communication device sends a part of AI network parameters to the first communication device, the first communication device obtains a part of AI network parameters through real-time training, and these AI network parameters jointly form the AI network; and in another example, a part of AI network parameters are predefined in a protocol, the second communication device sends a part of AI network parameters to the first communication device, the first communication device obtains a part of AI network parameters through real-time training, and these AI network parameters jointly form the AI network.

S204. The first communication device processes a target service according to the AI network parameter.

In this embodiment of this application, the first communication device supports processing the target service in a manner of using the AI network, or in other words, the first communication device supports implementing a target module in a manner of using the AI network, and the target module may be configured to process the target service.

In the step, the first communication device may process the target service according to the AI network formed by the AI network parameter. Optionally, the first communication device may perform at least one of the following according to the AI network parameter.
1) Signal processing. For example, signal detection, filtering, equalization, or the like. The signal may include a demodulation reference signal (Demodulation Reference Signal, DMRS), a sounding reference signal (Sounding Reference Signal, SRS), a synchronization signal and PBCH block (Synchronization Signal and PBCH block, SSB), a tracking reference signal (Tracking Reference Signal, TRS), a phase tracking reference signal (Phase Tracking Reference Signal, PTRS), a channel state information-reference signal (Channel State Information-Reference Signal, CSI-RS), or the like.
2) Channel transmission. For example, the channel includes a physical downlink control channel (Physical Downlink Control Channel, PDCCH), a physical downlink shared channel (Physical Downlink Shared Channel, PDSCH), a physical uplink control channel (Physical Uplink Control Channel, PUCCH), a physical uplink shared channel (Physical Uplink Shared Channel, PUSCH), a physical random access channel (Physical Random Access Channel, PRACH), a physical broadcast channel (Physical Broadcast Channel, PBCH), or the like. For example, sending and receiving signals, signaling, or data on the channel.
3) Acquisition of channel state information

Optionally, the acquisition of channel state information may include at least one of channel state information feedback and frequency division duplexing (Frequency Division Duplexing, FDD) uplink and downlink partial reciprocity.

The channel state information feedback includes at least one of channel related information, channel matrix related information, channel characteristic information, channel matrix characteristic information, a pre-coding matrix indicator (Pre-coding Matrix Indicator, PMI), a rank indicator (Rank Indicator, RI), a channel quality indicator (Channel Quality Indicator, CQI), a CSI-RS resource indicator (CSI-RS Resource Indicator, CRI), a layer indication (Layer Indicator, LI), or the like.

Regarding the FDD uplink and downlink partial reciprocity, for an FDD system, according to the partial reciprocity, the network-side device may notify the terminal of angle information and latency information, or other channel state information with the partial reciprocity, or directly estimated downlink channel information through a method of pre-coding or directly indicating a channel state information-reference signal (Channel State Information-Reference Signal, CSI-RS). The terminal reports according to the indication of the network-side device, or selects and reports in an indication range of the network-side device, or the terminal uses these downlink channel signals, thereby reducing a calculation amount of the terminal and the overhead of reporting channel state information (Channel State Information, CSI).
4) Beam management. For example, the beam management includes beam measurement, beam reporting, beam prediction, beam failure detection, beam failure recovery, and a new beam indicator in beam failure recovery.
5) Channel prediction. For example, the channel prediction includes prediction of channel state information and beam prediction.
6) Interference suppression. For example, the interference suppression includes intra-cell interference, inter-cell interference, out-of-band interference, intermodulation interference, or the like.
7) Positioning. For example, a specific location or a possible future movement trajectory of the terminal is estimated by using a reference signal (such as an SRS), and the location may include a horizontal location and/or a vertical location.
8) Prediction of a high layer service or a parameter. The high layer service or parameter may include a throughput, a size of a required data packet, a service requirement, a movement speed, noise information, or the like.
9) Management of a high layer service or a parameter. The high layer service or parameter may include a throughput, a size of a required data packet, a service requirement, a movement speed, noise information, or the like.

In the configuration method for the AI network parameter provided in the embodiments of this application, the first communication device may obtain the AI network parameter in at least one of a manner of predefinition, a manner of receiving from the second communication device, and a manner of real-time training, so that the AI network is introduced into a communication process, which facilitates improvement of performance of the communication module and performance of the communication system.

The AI network parameter mentioned in an embodiment 100 may include a structure of the AI network. Optionally, the structure of the AI network includes at least one of the following 1) to 8).
1) a fully connected neural network, a convolutional neural network, a recurrent neural network, or a residual network.
2) A combination manner of a plurality of sub-networks included in the AI network. For example, a combination manner of a fully connected neural network and a convolutional neural network, a combination manner of a convolutional neural network and a residual network, or the like.
3) A quantity of hidden layers of the AI network, and the quantity of layers of the hidden layers may be one or more.
4) A connection manner between an input layer and the hidden layer of the AI network, for example, a connection manner between a plurality of neurons at the input layer and a plurality of neurons at the hidden layer. The connection manner may specifically include which neuron at the input layer is connected to which neuron at the hidden layer, or the like.
5) A connection manner between a plurality of hidden layers of the AI network. The quantity of layers of the hidden layers in the example may be more than one. For example, a connection manner between a plurality of neurons at a first hidden layer and a plurality of neurons at a second hidden layer. The connection manner may specifically include which neuron at the first hidden layer is connected to which neuron at the second hidden layer, or the like.
6) A connection manner between a hidden layer and an output layer of the AI network. For example, a connection manner between a plurality of neurons at the hidden layer and a plurality of neurons at the output layer. The connection manner may specifically include which neuron at the hidden layer is connected to which neuron at the output layer, or the like.
7) A quantity of neurons at each layer of the AI network. In the example, a quantity of neurons at different layers (may include the input layer, the hidden layer, the output layer, or the like) may be different or the same.
8) An activation function of the AI network. The activation function of the AI network includes a type of the activation function, a specific parameter, or the like. Common activation functions include Sigmoid, a hyperbolic tangent function (tanh), a rectified linear unit (Rectified Linear Unit, ReLU, also referred to as a rectified linear unit), or the like.

In an example, the AI network mentioned in the foregoing embodiments of the specification includes the convolutional neural network (CNN), where the AI network meets at least one of the following: 1) the neuron in the AI network further includes a convolution kernel; 2) the multiplicative coefficient of the neuron in the AI network includes a weight coefficient (similar to the multiplicative coefficient); and 3) the additive coefficient of the neuron in the AI network includes a bias (similar to the additive coefficient).

In another example, the AI network mentioned in the foregoing embodiments of the specification includes the recurrent neural network (RNN), where the AI network parameter further includes a multiplicative weighting coefficient (including a state-state weight, and a state-input weight, that is, a weight of influence of a previous state on a current state, and a weight of influence of a previous state on a current input) of a recurrent unit and an additive weighting coefficient (a bias) of the recurrent unit. In the example, for example, a recurrent unit is a special neuron whose input includes not only a current input, but also a previous input and/or previous intermediate information. In the example, the state-state weight, or the state-input weight may be first used in a specific application; and a coefficient (the multiplicative weighting coefficient and the additive weighting coefficient) of the recurrent unit, or a coefficient of a neuron of a non-recurrent unit may be first used.

Optionally, the AI network parameter mentioned in the embodiment 100 includes the AI network parameter acquired in a predefined manner. For example, a set of AI network parameters may be defaulted in a protocol. In another example, N sets of AI network parameters may further be defaulted in the protocol, where N is an integer greater than or equal to 2.

In a case in which the N sets of AI network parameters are defaulted in the protocol, the foregoing embodiments further include one of the following:
1) reporting, by the first communication device, a supported AI network parameter to the second communication device; and for example, the terminal reports which sets of AI network parameters the terminal supports to the network-side device according to a processing capability of the terminal.
2) The first communication device reports an AI network parameter that is selected to be used to the second communication device.
   For example, the first communication device reports which set of AI network parameters to select. Optionally, the AI network parameter reported by the first communication device belongs to the sets of AI network parameters supported by the first communication device reported in 1). Optionally, in the embodiment, it may further be necessary for the second communication device to send confirmation information before the AI network formed by the reported AI network parameter may be used.
3) The first communication device receives first indication information from the second communication device, where the first indication information is used for indicating an AI network parameter used by the first communication device. For example, the network-side device indicates the terminal which set of AI network parameters to use.

In a case of 3), optionally, after the receiving, by the first communication device, first indication information from the second communication device, the method further includes: sending, by the first communication device, confirmation information, where an AI network parameter indicated by the first indication information is valid after a target time period after the confirmation information is sent. For example, if the first indication information is a media access control-control element (Media Access Control-Control Element, MAC CE), the first communication device sends/the second communication device receives an acknowledgment (Acknowledgment, ACK) corresponding to the MAC CE, plus a period of response time (K symbols/slots, and K is an integer), and the AI network parameter may be used. If the first indication information is radio resource control (Radio Resource Control, RRC), the first communication device sends/the second communication device receives an acknowledgment (Acknowledgment, ACK) corresponding to the RRC, plus a period of response time (K symbols/slots, and K is an integer), and the AI network parameter may be used.

In a case of 3), optionally, the first communication device (such as the terminal) may indirectly learn which set of AI network parameters to use through other network-side parameters. For example, the network-side parameters are cell-specific parameters, serving cell configuration (ServingCellConfig), serving cell common configuration (ServingCellConfigCommon), serving cell common configuration of a system information block (ServingCellConfigCommonSIB), or the like. For example, specific signaling in the ServingCellConfigCommon represents some physical characteristics/environmental characteristics of the cell. The physical characteristics/environmental characteristics correspond to a set of AI network parameters. After the terminal acquires the ServingCellConfigCommon, the network-side device and the terminal automatically use the set of AI network parameters.

In a case of 3), optionally, the AI network parameter indicated by the second communication device through the first indication information belongs to the sets of AI network parameters supported by the first communication device reported in 1). For example, five sets of AI network parameters are specified in the protocol, and the terminal reports a first set and a second set of AI network parameters that are supported, then the network-side device indicates that the AI network parameter used by the terminal may only be the first set or second set of AI network parameters.

In a case of 3), optionally, the first indication information is used for indicating a plurality of AI network parameters, and the method further includes one of the following:
a) receiving, by the first communication device, second indication information from the second communication device, where the second indication information is used for indicating the AI network parameter used by the first communication device among the plurality of AI network parameters indicated by the first indication information. In the example, for example, a large set including a plurality of sets of AI network parameters is specified in the protocol. The second communication device indicates a small set including several sets of AI network parameters through signaling (that is, the first indication information) such as RRC/MAC CE/system information blocks (System Information Blocks, SIB), and then activates one of the sets of AI network parameters through signaling (that is, the second indication information) such as MAC CE/downlink control information (Downlink Control Information, DCI).
b) The first communication device reports the AI network parameter that is selected to be used to the second communication device, where the AI network parameter that is selected to be used is included in the plurality of AI network parameters indicated by the first indication information. In the example, for example, a large set including a plurality of sets of AI network parameters is specified in the protocol. The second communication device indicates a small set including several sets of AI network parameters through signaling (that is, the first indication information) such as RRC/MAC CE/ SIB. Then, the first communication device reports a set of AI network parameters that is selected to be used to the second communication device.

Optionally, the AI network parameter mentioned in a case of 1) to 3) is obtained from at least one of the following: hardware configurations of the first communication device and the second communication device; channel environments of the first communication device and the second communication device; and quality of service required by the first communication device.

The hardware configurations of the first communication device and the second communication device, for example, the hardware configurations of the network-side device and the terminal, may include at least one of the following: an antenna-related parameter (for example, the network-side device and the terminal; and a horizontal dimension and a vertical dimension), and a processing capability-related parameter.

Specifically, the antenna-related parameter may include: a quantity of antenna elements, a quantity of transmit and receive units (Transmit and Receive Unit, TXRU), a quantity of antenna panels, distribution/a location of an antenna array, a beamforming capability (envelope) of an antenna array, distribution/a location of an antenna panel (such as how the antenna panel is placed in the terminal, whether a specific panel is on the front, side, or back of a screen of the terminal, and where is a specific location), or whether there is a beam correspondence (beam correspondence).

Specifically, the processing capability-related parameter may include: a signal processing capability, a data computing capability, a storage capability, a CPU capability, a GPU capability, and a neural-network process unit (neural-network process unit, NPU) capability.

The channel environment includes at least one of the following: a sending power, a noise power, an interference power, line-of-sight transmission of a wireless signal, non-line-of-sight transmission of a wireless signal, latency information, a scattering condition, channel time variability, a movement speed, a rotation speed, a surrounding occlusion variation speed, and an occlusion condition.

The quality of service required by the first communication device includes at least one of the following: a battery power, a throughput value, latency information, a size of a to-be-transmitted data packet, a bit error rate, a signal-to-noise ratio or a signal-to-interference-noise ratio, a maximum quantity of retransmissions, and a service type. The service type includes, for example, an ultra-reliable and low-latency communication URLLC service and an enhanced mobile broadband eMBB service.

Optionally, the AI network parameter in the embodiment 100 includes the AI network parameter from the second communication device. In this way, the AI network parameter is transmitted according to at least one of the following sequences: 1) according to a sequence of a layer at which the AI network parameter is located; 2) according to a sequence of a neuron at a layer at which the AI network parameter is located; and 3) according to sequences of a multiplicative coefficient (weight) and an additive coefficient (bias) of an AI network.

For example, multiplicative coefficients of all neurons are first listed, and then additive coefficients of all neurons are listed; or additive coefficients of all neurons are first listed, and then multiplicative coefficients of all neurons are listed; or a multiplicative coefficient and an additive coefficient of a neuron are listed, and then a multiplicative coefficient and an additive coefficient of a next neuron are listed.

Optionally, the AI network parameter mentioned in the embodiment 100 includes the AI network parameter from the second communication device. In this way, each AI network parameter may use the same bit overhead, and may further use different bit overheads. For example, different target units may have different bit overheads according to a neuron, a multiplicative coefficient, and an additive coefficient. For example, a gradient bit overhead for the multiplicative coefficient is higher than a gradient bit overhead for the additive coefficient.

Optionally, the AI network parameter mentioned in the embodiment 100 includes the AI network parameter obtained by real-time training. For example, the network-side device and/or a terminal side may use any initial AI network parameter, to update the AI network parameter through a method of real-time training.

Optionally, the AI network parameter mentioned in the embodiment 100 includes a combination of at least two of the three that are predefined, received from the second communication device, or real-time training.

In the example, for example, the network-side device and/or the terminal side obtains the initial AI network parameter through a manner of being defaulted in a protocol and/or AI network parameter transmission (that is, a manner of receiving from the second communication device); and after the initial AI network parameter is obtained, or there is no initial AI network parameter, then the AI network parameter is updated through the method of AI network parameter transmission and/or real-time training.

In the example, if there is no initial AI network parameter, the network-side device and/or the terminal side automatically determines the AI network parameter. After the initial AI network parameter is obtained, the AI network corresponding to the AI network parameter may be used.

Optionally, after the initial AI network parameter is obtained, the AI network corresponding to the AI network parameter cannot be used yet. A pre-condition under which an AI network corresponding to the AI network parameter is available may include at least one of the following: 1) performance of the AI network meets a target performance requirement; 2) the AI network is trained for a target quantity of times; and 3) a target latency expires.

For the condition in 1), it may be that the performance of the AI network meets a specific performance requirement; or joint performance of a plurality of AI networks meets a specific performance requirement; or performance of the entire communication system meets a specific performance requirement.

Optionally, the performance of the AI network includes at least one of the following: a combined function of at least one of an output and label (an actual value) error, a mean square error, a normalized mean square error, correlation, entropy, mutual information, and a constant.

A combination manner of the combination function includes a combination of various common mathematical operations such as addition and subtraction of multipliers, N^{th} power, N^{th} root sign, logarithm, derivation, and partial derivation. N is an arbitrary number. For example, N may be a positive number or a negative number or 0, and a real number or a complex number.

Specifically, output of the AI network may be divided into a plurality of parts, and a single part calculates a loss or a function associated with a loss according to the method; and then, the loss of a plurality of parts or the function associated with the loss is combined into a final loss function by weighting.

The weighting includes linear averaging, multiplicative averaging, and a combination of other common averaging methods. A division basis may include air domain resource division, code domain resource division, frequency domain resource division, time domain resource division, or the like. For example, the air domain resource is divided in a manner such as an antenna, an antenna element, an antenna panel, a transmit and receive unit, a beam (an analog beam, a digital beam), a layer (Layer), a rank (Rank), an antenna angle (such as an inclination angle), or the like. For example, the code domain resource is divided in a manner such as different orthogonal or non-orthogonal code domains; and There are many methods to divide a code domain, such as code division multiple access (Code Division Multiple Access, CDMA), or the like. For example, the frequency domain resource is divided in a manner such as a resource block (Resource Block, RB), a sub-band, a physical pre-coding resource block group (Physical Pre-coding resource block group, PRG), or the like. In another example, the time domain resource is divided in a manner such as a subcarrier, a symbol, a slot, a half slot, or the like.

Optionally, the performance of the AI network includes at least one of the following: a signal-to-noise ratio, a power, noise, interference, a signal-to-interference-noise ratio, a throughput, spectrum efficiency, call quality, a transmission data volume, a size of a service packet, an interruption probability, a latency, sensitivity, a quantity of paired users, a period, power consumption, and complexity.

The specific parameter mentioned in the foregoing embodiments (for example, a target quantity of times, a target latency, or the like) may be defaulted in a protocol, or configured by the network-side device, or reported by the terminal.

To verify the beneficial effect of the configuration method for the AI network parameter provided in the embodiments of this application, verification will be performed with reference to a simulation example below.

Considering a downlink communication system, the network-side device (a base station) is configured with 8 or 32 sending antennas, and the terminal (a user) is configured with 2 receiving antennas. Considering 1 RB in frequency domain, a channel restored by the base station is a channel with one layer. A clustered delay line (Clustered Delay Line, CDL)-C and a CDL-D model in the 3rd generation partnership project (3rd Generation Partnership Project, 3GPP) protocol is used. A latency configuration is 30/100/300 nanoseconds, a carrier frequency configuration is 4G Hz, and a movement speed is 3 kilometers per hour. The loss function is a square of correlation between a final network output and a true value. The training method is an Adam algorithm commonly used in the neural network. A quantity of training sets and a quantity of verification sets for each channel model are 60, 000 and 10, 000 respectively.

A case of 8 sending antennas on the network side is first considered. In Table 1 below, results of the AI network and a Type I codebook in different channel environments are compared. In a first case, a CDL-D channel model with a latency of 100 nanoseconds is used, to simulate a channel environment with a relatively strong direct path; and in a second case, a CDL-C channel model with a latency of 300 nanoseconds is used, to simulate a channel environment with many scattering paths. In a third case, a mixed channel model of CDL-D and CDL-C is used, each accounting for half. The CDL-D uses a latency of 30 nanoseconds, and the CDL-C uses a latency of 300 nanoseconds. It may be seen that in different channel environments, performance of a 6-bit neural network may reach or approach performance of an 8-bit Type I codebook, and the gain is obvious.

**Table 1 Results of an AI network and a Type I codebook when there are 8 sending antennas on a network side in different channel environments**

| | A squared of correlation between a recovered channel and an actual channel | | |
|---|---|---|---|
| | CDL-D channel model with a latency of 100 nanoseconds | CDL-C channel model with a latency of 300 nanoseconds | CDL-D 30 nanoseconds+CDL-C 300 nanoseconds |
| Type I codebook (8 bits) | 0.87 | 0.75 | 0.80 |
| Neural network 2 bits | 0.58 | 0.57 | 0.56 |
| Neural network 4 bits | 0.76 | 0.69 | 0.72 |
| Neural network 6 bits | 0.85 | 0.77 | 0.80 |
| Neural network 8 bits | 0.90 | 0.82 | 0.85 |
| Neural network 12 bits | 0.94 | 0.86 | 0.89 |
| Neural network 16 bits | 0.95 | 0.89 | 0.91 |

Next, a case of 32 sending antennas on the network side is considered. In this case, a CDL-C channel with a latency of 300 nanoseconds is used. Based on table 2 below, it may be seen that the AI network (that is, the neural network) may achieve performance of a Type I codebook of 10 bits with an overhead of 6 bits, and the gain is obvious.

**Table 2 Results of a neural network and a Type I codebook when there are 32 sending antennas on a network side in different channel environments**

| | A squared of correlation between a recovered channel and an actual channel |
|---|---|
| Type I codebook (10 bits) | 0.58 |
| Neural network 2 bits | 0.25 |
| Neural network 4 bits | 0.47 |
| Neural network 6 bits | 0.60 |
| Neural network 8 bits | 0.67 |
| Neural network 10 bits | 0.72 |

It may be seen that to achieve performance of the Type I codebook, the overhead of the AI network does not increase. On the one hand, due to the significant increase in the quantity of antennas in the network-side device, complexity of a codebook design and corresponding feedback volume of a codebook-based feedback solution increase significantly. Therefore, a codebook method faces a relatively great technical challenge; and on the other hand, when the quantity of antennas in the network-side device increases, a resolution of a channel matrix in an angle domain is higher, and the channel matrix has stronger sparse characteristics. Therefore, as the quantity of antennas increases, a performance advantage of the solution provided in the embodiments of this application is more obvious compared with the codebook method.

It is to be noted that in the configuration method for the AI network parameter provided in the embodiments of this application, an execution entity may be a first communication device, or a control module configured to perform the configuration method for the AI network parameter in the first communication device. In the embodiments of this application, the first communication device provided in the embodiments of this application is described by using an example in which the configuration method for the AI network parameter is performed by the first communication device.

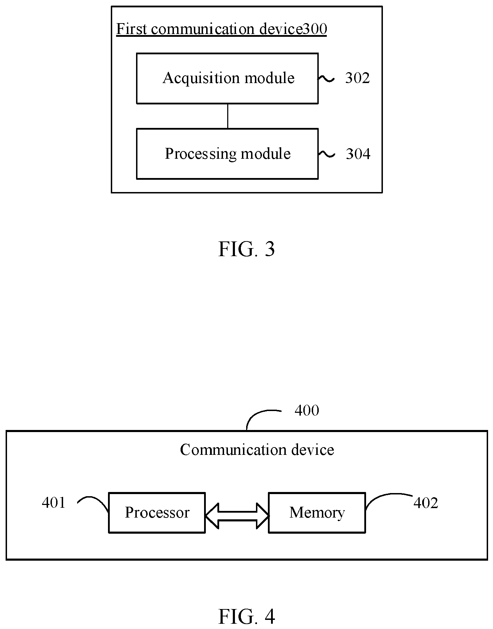

FIG. 3 is a schematic structural diagram of a first communication device according to an embodiment of this application. The first communication device may be a terminal, and correspondingly, the second communication device is a network-side device; or the first communication device may also be a network-side device, and correspondingly, the second communication device is a terminal. As shown in FIG. 3, the communication device 300 includes the following modules.

An acquisition module 302 may be configured to obtain an AI network parameter in at least one of the following manners: predefinition, receiving from a second communication device, and real-time training.

A processing module 304 may be configured to process a target service according to the AI network parameter.

In the embodiments of this application, the first communication device may obtain the AI network parameter in at least one of a manner of predefinition, a manner of receiving from the second communication device, and a manner of real-time training, so that the AI network is introduced into a communication process, which facilitates improvement of performance of the communication module and performance of the communication system.

Optionally, as an embodiment, the processing module 304 is configured to perform at least one of the following: signal processing, channel transmission, acquisition of channel state information, beam management, channel prediction, interference suppression, positioning, prediction of a high layer service or parameter, and management of a high layer service or parameter.

Optionally, as an embodiment, the AI network parameter includes at least one of the following: a structure of an AI network, a multiplicative coefficient of a neuron in an AI network, an additive coefficient of a neuron in an AI network, and an activation function of a neuron in an AI network.

Optionally, as an embodiment, a structure of the AI network includes at least one of the following: a fully connected neural network, a convolutional neural network, a recurrent neural network, and a residual network; a combination manner of a plurality of sub-networks included in the AI network; a quantity of hidden layers of the AI network; a connection manner between an input layer and a hidden layer of the AI network; a connection manner between a plurality of hidden layers of the AI network; a connection manner between a hidden layer and an output layer of the AI network; a quantity of neurons at each layer of the AI network; or an activation function of the AI network.

Optionally, as an embodiment, activation functions used by a plurality of neurons in the AI network are the same, and/or a neuron at an output layer of the AI network does not include an activation function.

Optionally, as an embodiment, the AI network includes a convolutional neural network; and the AI network meets at least one of the following: the neuron in the AI network further includes a convolution kernel; the multiplicative coefficient of the neuron in the AI network includes a weight coefficient; and the additive coefficient of the neuron in the AI network includes a bias.

Optionally, as an embodiment, the AI network includes a recurrent neural network; and the AI network parameter further includes a multiplicative weighting coefficient of a recurrent unit and an additive weighting coefficient of the recurrent unit.

Optionally, as an embodiment, the AI network parameter is predefined, and the first communication device further includes a communication module, configured to perform one of the following: reporting, by the first communication device, a supported AI network parameter to the second communication device; reporting an AI network parameter that is selected to be used to the second communication device; or receiving first indication information from the second communication device, where the first indication information is used for indicating an AI network parameter used by the first communication device.

Optionally, as an embodiment, the first indication information is used for indicating a plurality of AI network parameters, and the communication module is further configured to perform one of the following: 1) receiving second indication information from the second communication device, where the second indication information is used for indicating the AI network parameter used by the first communication device among the plurality of AI network parameters indicated by the first indication information; or 2) reporting the AI network parameter that is selected to be used to the second communication device, where the AI network parameter that is selected to be used is included in the plurality of AI network parameters indicated by the first indication information.

Optionally, as an embodiment, the communication module is further configured to send confirmation information, where an AI network parameter indicated by the first indication information is valid after a target time period after the confirmation information is sent.

Optionally, as an embodiment, the AI network parameter is obtained according to at least one of the following: hardware configurations of the first communication device and the second communication device; channel environments of the first communication device and the second communication device; and quality of service required by the first communication device.

Optionally, as an embodiment, the hardware configuration includes at least one of the following: an antenna-related parameter, and a processing capability-related parameter, and/or the channel environment includes at least one of the following: a sending power, a noise power, an interference power, line-of-sight transmission of a wireless signal, non-line-of-sight transmission of a wireless signal, latency information, a scattering condition, channel time variability, a movement speed, a rotation speed, a surrounding occlusion variation speed, and an occlusion condition; and/or the quality of service required by the first communication device includes at least one of the following: a battery power, a throughput value, latency information, a size of a to-be-transmitted data packet, a bit error rate, a signal-to-noise ratio or a signal-to-interference-noise ratio, a maximum quantity of retransmissions, and a service type.

Optionally, as an embodiment, the AI network parameter is from the second communication device, and the AI network parameter is transmitted according to at least one of the following sequences: according to a sequence of a layer at which the AI network parameter is located; according to a sequence of a neuron at a layer at which the AI network parameter is located; and according to a sequence of a multiplicative coefficient and an additive coefficient of an AI network.

Optionally, as an embodiment, a condition under which an AI network corresponding to the AI network parameter is available includes at least one of the following: performance of the AI network meets a requirement of target performance; the AI network is trained for a target quantity of times; and a target latency expires.

Optionally, as an embodiment, the performance of the AI network includes at least one of the following: a combined function of at least one of an error between output and a label, a mean square error, a normalized mean square error, correlation, entropy, mutual information, and a constant.

Optionally, as an embodiment, the performance of the AI network includes at least one of the following: a signal-to-noise ratio, a power, noise, interference, a signal-to-interference-noise ratio, a throughput, spectrum efficiency, call quality, a transmission data volume, a size of a service packet, an interruption probability, a latency, sensitivity, a quantity of paired users, a period, power consumption, and complexity.

The first communication device 300 in this embodiment of this application may refer to a process of the method 200 corresponding to this embodiment of this application. Various units/modules in the first communication device 300 and other operations and/or functions are respectively for implementing corresponding processes in the method 200 and may implement the same or equivalent technical effects. For brevity, details are not described herein again.

The first communication device in this embodiment of this application may be an apparatus, and may also be a component in a terminal, an integrated circuit, or a chip. The apparatus may be a mobile terminal, or may be a non-mobile terminal. For example, the mobile terminal may include, but is not limited to, a type of the terminal 11 listed above, and a non-mobile terminal may be a server, a network attached storage (Network Attached Storage, NAS), a personal computer (personal computer, PC), a television (television, TV), a cash machine, a self-service machine, or the like, which is not specifically limited in this embodiment of this application.

The first communication device in this embodiment of this application may be an apparatus having an operating system. The operating system may be an Android (Android) operating system, may be an ios operating system, and may further be another possible operating system, which is not specifically limited in this embodiment of this application.

The first communication device provided in this embodiment of this application may implement various processes of the method embodiment in FIG. 2, and implement the same technical effect, which will not be described in detail herein again to avoid repetition.

Optionally, as shown in FIG. 4, the embodiments of this application further provide a communication device 400 (corresponding to the first communication device in other embodiments), including a processor 401, a memory 402, and a program or an instruction stored in the memory 402 and executable on the processor 401. For example, when the communication device 400 is a terminal, the program or instruction is executed by the processor 401 to perform various processes of embodiments of the configuration method for the AI network parameter, and may implement the same technical effect. When the communication device 400 is a network-side device, the program or instruction is executed by the processor 401 to implement various processes of embodiments of the configuration method for the AI network parameter, and may implement the same technical effect, which will not be described in detail herein again to avoid repetition.

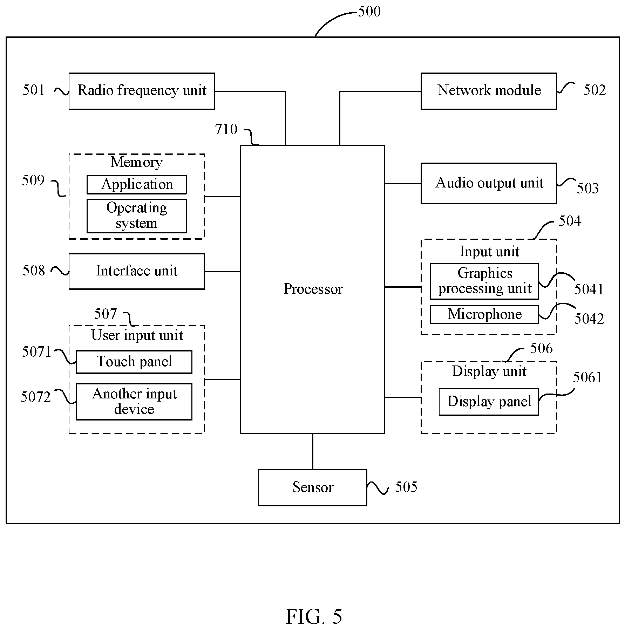

FIG. 5 is a schematic diagram of a hardware structure of a terminal according to an embodiment of this application.

The terminal 500 includes, but is not limited to, components such as a radio frequency unit 501, a network module 502, an audio output unit 503, an input unit 504, a sensor 505, a display unit 506, a user input unit 507, an interface unit 508, a memory 509, and a processor 510.

A person skilled in the art may understand that the terminal 500 may further include a power supply (such as a battery) for supplying power to the components. The power supply may be logically connected to the processor 510 by a power management system, thereby implementing functions such as charging, discharging, and power consumption management by using the power management system. A terminal structure shown in FIG. 5 does not constitute a limitation to the terminal, and the terminal may include more or fewer components than those shown in the figure, or some components may be combined, or a different component deployment may be used, and details are not repeated herein.

It should be understood that, in this embodiment of this application, the input unit 504 may include a graphics processing unit (Graphics Processing Unit, GPU) 5041 and a microphone 5042. The graphics processing unit 5041 performs processing on image data of a static picture or a video that is obtained by an image acquisition apparatus (for example, a camera) in a video acquisition mode or an image acquisition mode. The display unit 506 may include a display panel 5061, and the display panel 5061 may be configured by using a liquid crystal display, an organic light-emitting diode, or the like. The user input unit 507 includes a touch panel 5071 and another input device 5072. The touch panel 5071 is also referred to as a touchscreen. The touch panel 5071 may include two parts: a touch detection apparatus and a touch controller. The another input device 5072 may include, but not limited to, a physical keyboard, a functional key (such as a volume control key or a switch key), a track ball, a mouse, and a joystick, which are not described herein in detail.

In this embodiment of this application, the radio frequency unit 501 receives downlink data from a network-side device and transmits the downlink data to the processor 510 for processing; and sends uplink data to the network-side device. Generally, the radio frequency unit 501 includes, but is not limited to, an antenna, at least one amplifier, a transceiver, a coupler, a low noise amplifier, a duplexer, and the like.

The memory 509 may be configured to store a software program or an instruction and various data. The memory 509 may mainly include a program or an instruction storage area and a data storage area. The program or instruction storage area may store an operating system, an application program or instruction required by at least one function (such as a sound playback function and an image display function), and the like. In addition, the memory 509 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. Such as at least one magnetic disk storage device, a flash storage device, or other non-volatile solid-state storage devices.

The processor 510 may include one or more processing units; and optionally, the processor 510 may integrate an application processor and a modem processor. The application processor mainly processes an operating system, a user interface, an application program or an instruction, and the like. The modem processor mainly processes wireless communication, such as a baseband processor. It may be understood that the foregoing modem processor may either not be integrated into the processor 510.

The terminal 500 provided in the embodiments of this application may obtain an AI network parameter in at least one of the following manners: predefinition, receiving from a second communication device, and real-time training; or process a target service according to the AI network parameter.

In this embodiment of this application, the terminal 500 may obtain the AI network parameter in at least one of a manner of predefinition, a manner of receiving from the network-side device, and a manner of real-time training, so that the AI network is introduced into a communication process, which facilitates improvement of performance of the communication module and performance of the communication system.

The terminal 500 provided in the embodiments of this application may further implement various processes of embodiments of the configuration method for the AI network parameter, and implement the same technical effect, which will not be described in detail herein again to avoid repetition.

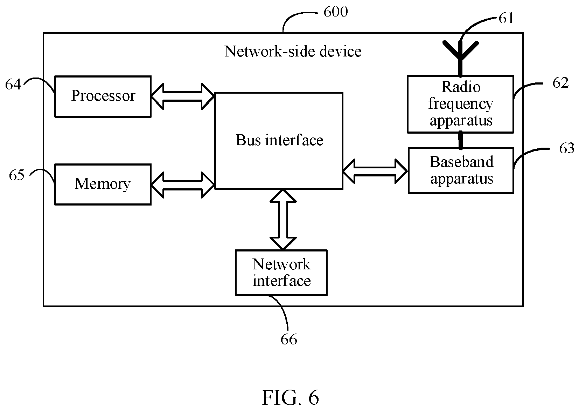

Specifically, this embodiment of this application further provides a network-side device. As shown in FIG. 6, the network device 600 includes: an antenna 61, a radio frequency apparatus 62, and a baseband apparatus 63. The antenna 61 is connected to the radio frequency apparatus 62. In an uplink direction, the radio frequency apparatus 62 receives information through the antenna 61, and transmits the received information to the baseband apparatus 63 for processing. In a downlink direction, the baseband apparatus 63 performs processing on the to-be-transmitted information, and transmits the to-be-transmitted information to the radio frequency apparatus 62. After performing processing on the received information, the radio frequency apparatus 62 transmits the received information out through the antenna 61.

The band processing apparatus may be located in the baseband apparatus 63, and the method performed by the network-side device in the foregoing embodiments may be implemented in the baseband apparatus 63. The baseband apparatus 63 includes a processor 64 and a memory 65.

The baseband apparatus 63 may include, for example, at least one baseband board, and a plurality of chips are arranged on the baseband board. As shown in FIG. 6, for example, one of the chips is a processor 64, and is connected to the memory 65, to invoke the program in the memory 65, and to perform the network device operation shown in the foregoing method embodiments.

The baseband apparatus 63 may further include a network interface 66 used for exchanging information with the radio frequency apparatus 62. For example, the interface is a common public radio interface (common public radio interface, CPRI).

Specifically, the network-side device of the embodiments of the present invention further includes: an instruction or a program stored in the memory 65 and executable on the processor 64. The processor 64 invokes the instruction or program in the memory 65 to perform the method performed by each module shown in FIG. 3, and implements the same technical effect, which will not be described in detail herein again to avoid repetition.

The embodiments of this application further provide a readable storage medium storing therein a program or an instruction. When the program or the instruction is executed by a processor, various processes of embodiments of the configuration method for the AI network parameter is implemented, and the same technical effect is achieved, which will not be described in detail herein again to avoid repetition.

The processor may be a processor in the terminal described in the foregoing embodiment. The readable storage medium includes a computer-readable storage medium, for example, a Read-Only Memory (Read-Only Memory, ROM), a Random Access Memory (Random Access Memory, RAM), a magnetic disk, an optical disc or the like.

The embodiments of this application further provide a chip, including a processor and a communication interface, where the communication interface is coupled to the processor. The processor is configured to run a program or an instruction, to implement various processes of embodiments of the configuration method for the AI network parameter, and may implement the same technical effect, which will not be described in detail herein again to avoid repetition.

It should be understood that the chip mentioned in the embodiments of this application may further be referred to as a system-level chip, a system chip, a chip system, a system on chip, or the like.

The embodiments of this application further provide a computer program product, being stored in a non-volatile memory, where the computer program product, when executed by at least one processor, performs various processes of embodiments of the configuration method for the AI network parameter, and may implement the same technical effect, which will not be described in detail herein again to avoid repetition.

The embodiments of this application further provide a communication device, which is configured to perform various processes of embodiments of the configuration method for the AI network parameter, and may implement the same technical effect, which will not be described in detail herein again to avoid repetition.

It is to be noted that the term "include", "comprise" or any other variation thereof in this specification intends to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

Although the embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A configuration method for an artificial intelligence AI network parameter, comprising:
obtaining, by a first communication device, an AI network parameter in at least one of the following manners: predefinition, receiving from a second communication device, and real-time training; and
processing, by the first communication device, a target service according to the AI network parameter.

2. The method according to claim 1, wherein the processing, by the first communication device, a target service according to the AI network parameter comprises: performing, by the first communication device, at least one of following according to the AI network parameter:
signal processing, channel transmission, acquisition of channel state information, beam management, channel prediction, interference suppression, positioning, prediction of a high-layer service or parameter, and management of a high layer service or parameter.

3. The method according to claim 1, wherein the AI network parameter comprises at least one of following: a structure of an AI network, a multiplicative coefficient of a neuron in an AI network, an additive coefficient of a neuron in an AI network, and an activation function of a neuron in an AI network.

4. The method according to claim 3, wherein the structure of the AI network comprises at least one of following:
a fully connected neural network, a convolutional neural network, a recurrent neural network, or a residual network;
a combination manner of a plurality of sub-networks comprised in the AI network;
a quantity of hidden layers of the AI network;
a connection manner between an input layer and a hidden layer of the AI network;
a connection manner between a plurality of hidden layers of the AI network;
a connection manner between a hidden layer and an output layer of the AI network;
a quantity of neurons at each layer of the AI network; and
an activation function of the AI network.

5. The method according to claim 3, wherein
activation functions used by a plurality of neurons in the AI network are the same; and/or
a neuron at an output layer of the AI network does not comprise an activation function.

6. The method according to claim 3, wherein the AI network comprises a convolutional neural network; and the AI network meets at least one of following:
the neuron in the AI network further comprises a convolution kernel;
the multiplicative coefficient of the neuron in the AI network comprises a weight coefficient; and
the additive coefficient of the neuron in the AI network comprises a bias.

7. The method according to claim 3, wherein the AI network comprises a recurrent neural network; and the AI network parameter further comprises a multiplicative weighting coefficient of a recurrent unit and an additive weighting coefficient of the recurrent unit.

8. The method according to claim 1, wherein the AI network parameter is predefined, and the method further comprises one of following:
reporting, by the first communication device, a supported AI network parameter to the second communication device;
reporting, by the first communication device, an AI network parameter that is selected to be used to the second communication device; or
receiving, by the first communication device, first indication information from the second communication device, wherein the first indication information is used for indicating an AI network parameter used by the first communication device.

9. The method according to claim 8, wherein the first indication information is used for indicating a plurality of AI network parameters, and the method further comprises one of following:
receiving, by the first communication device, second indication information from the second communication device, wherein the second indication information is used for indicating the AI network parameter used by the first communication device among the plurality of AI network parameters indicated by the first indication information; or
reporting, by the first communication device, the AI network parameter that is selected to be used to the second communication device, wherein the AI network parameter that is selected to be used is comprised in the plurality of AI network parameters indicated by the first indication information.

10. The method according to claim 8, wherein after the receiving, by the first communication device, first indication information from the second communication device, the method further comprises:
sending, by the first communication device, confirmation information, wherein an AI network parameter indicated by the first indication information is valid after a target time period after the confirmation information is sent.

11. The method according to claim 8, wherein the AI network parameter is obtained according to at least one of following:
hardware configurations of the first communication device and the second communication device;
channel environments of the first communication device and the second communication device; and
quality of service required by the first communication device.

12. The method according to claim 11, wherein
the hardware configuration comprises at least one of following: an antenna-related parameter, and a processing capability-related parameter; and/or
the channel environment comprises at least one of following: a sending power, a noise power, an interference power, line-of-sight transmission of a wireless signal, non-line-of-sight transmission of a wireless signal, latency information, a scattering condition, channel time variability, a movement speed, a rotation speed, a surrounding occlusion variation speed, or an occlusion condition; and/or
the quality of service required by the first communication device comprises at least one of following: a battery power, a throughput value, latency information, a size of a to-be-transmitted data packet, a bit error rate, a signal-to-noise ratio or a signal-to-interference-noise ratio, a maximum quantity of retransmissions, and a service type.

13. The method according to claim 1, wherein the AI network parameter is from the second communication device, and the AI network parameter is transmitted according to at least one of following sequences:
according to a sequence of a layer at which the AI network parameter is located;
according to a sequence of a neuron at a layer at which the AI network parameter is located; and
according to a sequence of a multiplicative coefficient and an additive coefficient of an AI network.

14. The method according to claim 1, wherein a condition under which an AI network corresponding to the AI network parameter is available comprises at least one of following:
performance of the AI network meets a requirement of target performance;
the AI network is trained for a target quantity of times; and
a target latency expires.

15. The method according to claim 1, wherein performance of the AI network comprises at least one of following:
a combined function of at least one of an error between output and a label, a mean square error, a normalized mean square error, correlation, entropy, mutual information, and a constant.

16. The method according to claim 1, wherein performance of the AI network comprises at least one of following:
a signal-to-noise ratio, a power, noise, interference, a signal-to-interference-noise ratio, a throughput, spectrum efficiency, call quality, a transmission data volume, a size of a service packet, an interruption probability, a latency, sensitivity, a quantity of paired users, a period, power consumption, and complexity.

17. A first communication device, comprising:
an acquisition module, configured to obtain, by a first communication device, an AI network parameter in at least one of following manners: predefinition, receiving from a second communication device, and real-time training; and
a processing module, configured to process a target service according to the AI network parameter.

18. The first communication device according to claim 17, wherein the processing module is configured to perform at least one of following:
signal processing, channel transmission, acquisition of channel state information, beam management, channel prediction, interference suppression, positioning, prediction of a high layer service or parameter, and management of a high layer service or parameter.

19. The first communication device according to claim 17, wherein the AI network parameter comprises at least one of following: a structure of an AI network, a multiplicative coefficient of a neuron in an AI network, an additive coefficient of a neuron in an AI network, and an activation function of a neuron in an AI network.

20. The first communication device according to claim 19, wherein the structure of the AI network comprises at least one of following:
a fully connected neural network, a convolutional neural network, a recurrent neural network, or a residual network;
a combination manner of a plurality of sub-networks comprised in the AI network;
a quantity of hidden layers of the AI network;
a connection manner between an input layer and a hidden layer of the AI network;
a connection manner between a plurality of hidden layers of the AI network;
a connection manner between a hidden layer and an output layer of the AI network;
a quantity of neurons at each layer of the AI network; and
an activation function of the AI network.

21. The first communication device according to claim 19, wherein
activation functions used by a plurality of neurons in the AI network are the same; and/or
a neuron at an output layer of the AI network does not comprise an activation function.

22. The first communication device according to claim 19, wherein the AI network comprises a convolutional neural network; and the AI network meets at least one of following:
the neuron in the AI network further comprises a convolution kernel;
the multiplicative coefficient of the neuron in the AI network comprises a weight coefficient; and
the additive coefficient of the neuron in the AI network comprises a bias.

23. The first communication device according to claim 19, wherein the AI network comprises a recurrent neural network; and the AI network parameter further comprises a multiplicative weighting coefficient of a recurrent unit and an additive weighting coefficient of the recurrent unit.

24. The first communication device according to claim 17, wherein the AI network parameter is predefined, and the first communication device further comprises a communication module, configured to perform one of following:
reporting a supported AI network parameter to the second communication device;
reporting an AI network parameter that is selected to be used to the second communication device; or
receiving first indication information from the second communication device, wherein the first indication information is used for indicating an AI network parameter used by the first communication device.

25. The first communication device according to claim 24, wherein the first indication information is used for indicating a plurality of AI network parameters, and the communication module is further configured to perform one of following:
receiving second indication information from the second communication device, wherein the second indication information is used for indicating the AI network parameter used by the first communication device among the plurality of AI network parameters indicated by the first indication information; or
reporting the AI network parameter that is selected to be used to the second communication device, wherein the AI network parameter that is selected to be used is comprised in the plurality of AI network parameters indicated by the first indication information.

26. The first communication device according to claim 24, wherein the communication module is further configured to send confirmation information, wherein an AI network parameter indicated by the first indication information is valid after a target time period after the confirmation information is sent.

27. The first communication device according to claim 24, wherein the AI network parameter is obtained according to at least one of following:
hardware configurations of the first communication device and the second communication device;
channel environments of the first communication device and the second communication device; and
quality of service required by the first communication device.

28. The first communication device according to claim 27, wherein
the hardware configuration comprises at least one of following: an antenna-related parameter, and a processing capability-related parameter; and/or
the channel environment comprises at least one of following: a sending power, a noise power, an interference power, line-of-sight transmission of a wireless signal, non-line-of-sight transmission of a wireless signal, latency information, a scattering condition, channel time variability, a movement speed, a rotation speed, a surrounding occlusion variation speed, and an occlusion condition; and/or
the quality of service required by the first communication device comprises at least one of following: a battery power, a throughput value, latency information, a size of a to-be-transmitted data packet, a bit error rate, a signal-to-noise ratio or a signal-to-interference-noise ratio, a maximum quantity of retransmissions, and a service type.

29. The first communication device according to claim 17, wherein the AI network parameter is from the second communication device, and the AI network parameter is transmitted according to at least one of following sequences:
according to a sequence of a layer at which the AI network parameter is located;
according to a sequence of a neuron at a layer at which the AI network parameter is located; and
according to a sequence of a multiplicative coefficient and an additive coefficient of an AI network.

30. The first communication device according to claim 17, wherein a condition under which an AI network corresponding to the AI network parameter is available comprises at least one of following:
performance of the AI network meets a requirement of target performance;
the AI network is trained for a target quantity of times; and
a target latency expires.

31. The first communication device according to claim 17, wherein performance of the AI network comprises at least one of following:
a combined function of at least one of an error between output and a label, a mean square error, a normalized mean square error, correlation, entropy, mutual information, and a constant.

32. The first communication device according to claim 17, wherein performance of the AI network comprises at least one of following:
a signal-to-noise ratio, a power, noise, interference, a signal-to-interference-noise ratio, a throughput, spectrum efficiency, call quality, a transmission data volume, a size of a service packet, an interruption probability, a latency, sensitivity, a quantity of paired users, a period, power consumption, and complexity.

33. A communication device, comprising a processor, a memory, and a program or an instruction stored in the memory and executable on the processor, wherein when the program or the instruction is executed by the processor, the configuration method for the AI network parameter according to any one of claims 1 to 16 is implemented.

34. A readable storage medium, storing a program or an instruction, wherein when the program or the instruction is executed by a processor, the configuration method for the AI network parameter according to any one of claims 1 to 16 is implemented.
